# FASCICULE DE BREVET EUROPEEN

(11) **EP 3 347 648 B1**
(45) Date de publication et mention de la délivrance du brevet: **28.10.2020**
(21) Numéro de dépôt: 16774518.1
(22) Date de dépôt: 08.09.2016
(51) Int. Cl.: F23R 3/04, F01D 25/32, F02C 7/052, F02C 3/14

(54) **DISPOSITIF DE PIÉGEAGE DE PARTICULES POUR TURBOMACHINE ET TURBOMACHINE ÉQUIPÉE D'UN TEL DISPOSITIF**
PARTIKELEINFANGVORRICHTUNG FÜR EINE TURBOMASCHINE UND TURBOMASCHINE MIT SOLCH EINER VORRICHTUNG
PARTICLE-TRAPPING DEVICE FOR A TURBOMACHINE AND TURBOMACHINE WITH SUCH A DEVICE

(30) Priorité: 10.09.2015 FR 1558437
(43) Date de publication de la demande: 18.07.2018
(73) Titulaire: Safran Helicopter Engines, 64510 Bordes (FR)
(72) Inventeur: PAILLARD, Amaury, 64800 Bourdettes (FR); PASCAUD, Stéphane, 64000 Pau (FR)
(74) Mandataire: Regimbeau
(86) Numéro de dépôt international: PCT/FR2016/052241
(87) Numéro de publication internationale: WO 2017/042493

(56) Documents cités:
- EP-A1- 2 899 465
- EP-A2- 1 793 086
- US-A- 3 371 471
- US-A- 4 704 145

## Description

### DOMAINE TECHNIQUE GENERAL

L'invention se situe dans le domaine des turbomachines équipant notamment des avions ou des hélicoptères.

Elle concerne plus précisément un dispositif de piégeage des particules pour turbomachines, ces particules étant notamment des grains de sable ou des poussières, contenues dans un flux d'air circulant à l'intérieur de ladite turbomachine. Ce dispositif de piégeage est plus particulièrement destiné à être disposé dans la zone de contournement de la chambre de combustion d'une turbomachine.

L'invention concerne également une turbomachine équipée d'un tel dispositif de piégeage.

### ETAT DE L'ART

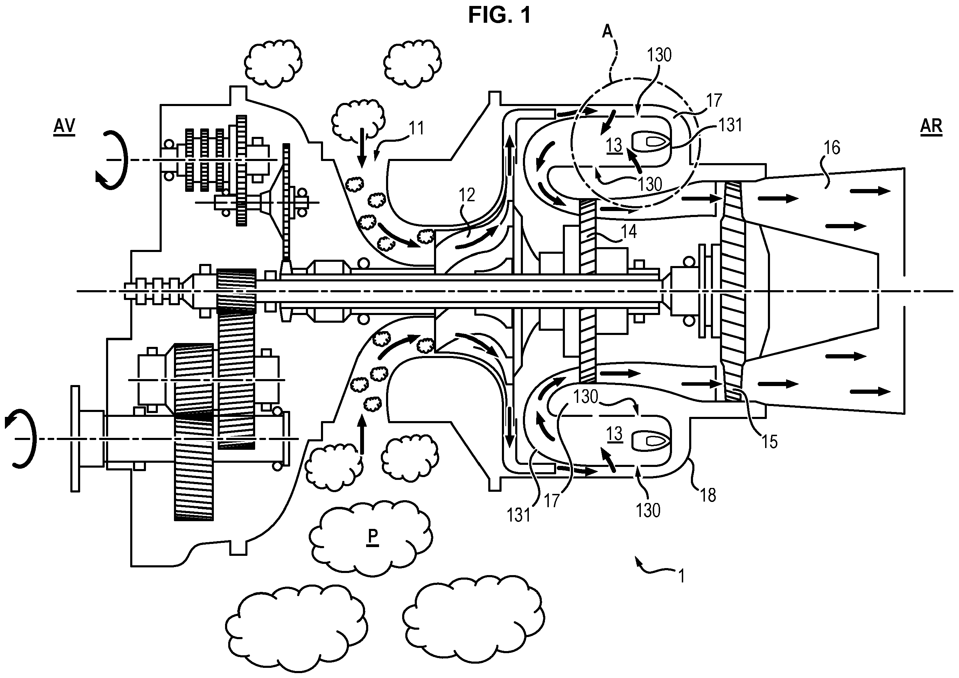

Comme on peut le voir sur le schéma de la figure 1 jointe, une turbomachine 1 comprend généralement, d'amont en aval, dans le sens d'écoulement des gaz, une prise d'air 11, un ou plusieurs étages de compresseur 12, (par exemple un seul sur ladite figure), une chambre de combustion annulaire 13, un ou plusieurs étages de turbines, par exemple une turbine haute pression 14 et une turbine basse pression 15, et enfin une tuyère 16 d'échappement des gaz.

Dans la suite de la description et des revendications et sur les figures, les termes "avant" (référence AV) et "arrière" (référence AR) sont utilisés en faisant référence à la disposition de la turbomachine sur l'avion ou l'hélicoptère.

L'air est aspiré au niveau de la prise d'air 11, est comprimé dans le compresseur 12, puis est dirigé dans la zone de contournement 17 de ladite chambre de combustion 13.

Pendant le fonctionnement de la turbomachine, les parois 131 de la chambre de combustion 13 sont soumises à de très fortes températures. Le refroidissement de ces parois est alors généralement assuré par la circulation de l'air sortant du compresseur 12, au travers d'un multi-perçage, c'est-à-dire de très nombreux trous de très faible diamètre, ménagés dans les parois 131 de ladite chambre de combustion.

Seuls quelques-uns de ces trous, référencés 130, ont été représentés sur la figure 1.

L'air et les gaz de combustion chauds sortant de la chambre de combustion 13 sont ensuite envoyés vers les turbines 14, 15 et la tuyère d'échappement 16.

Or, on a constaté que lorsque l'appareil équipé de ladite turbomachine effectue un vol dans une atmosphère poussiéreuse ou sablonneuse, par exemple dans un désert, des nuages de particules P, telles que des grains de sable et des poussières, sont ingérés au niveau de la prise d'air 11.

Ces particules P parviennent ensuite dans la zone de contournement 17 et finissent par obstruer les trous 130 ménagés dans les parois 131 de la chambre de combustion 13.

Or, si les trous 130 sont obstrués, l'air ne peut plus circuler dans la chambre de combustion 13, le refroidissement de ses parois 131 n'est plus assuré et la chambre de combustion se dégrade rapidement au contact des flammes.

Un dispositif connu permettant de retenir les particules P ingérées par la turbomachine est une grille d'entrée d'air, située au niveau des prises d'air 11, et qui permet de retenir une partie des corps étrangers avant leur pénétration dans la turbomachine.

Cependant, les particules P ayant une taille inférieure aux mailles de la grille sont ingérées.

Il n'est pas non plus envisageable d'installer un filtre avec des mailles plus fines, au niveau de la prise d'air, car cela provoquerait une perte de charge trop importante et causerait une chute des performances du moteur.

On connaît déjà d'après le document US 3 371 471, un dispositif de piégeage de particules, destiné à être placé au niveau de l'entrée d'air d'un moteur de turbine à gaz. Un tel dispositif comprend une série de chicanes incurvées que le flux d'air entrant vient frapper. Les particules retenues par ces chicanes sont collectées dans un dispositif annulaire de récupération des poussières.

Toutefois, un tel dispositif n'est pas compact et n'est pas prévu pour être installé dans la zone de contournement de la chambre de combustion d'une turbomachine.

En outre, les chicanes ont pour effet de freiner la circulation du flux d'air et d'entrainer une perte de charge importante.

### PRESENTATION DE L'INVENTION

L'invention a donc pour objectif de résoudre les inconvénients précités de l'état de la technique et de fournir un dispositif de piégeage des particules, qui permette de retenir celles-ci ou du moins une grande partie de celles-ci, avant qu'elles ne viennent obstruer les trous ménagés dans les parois de la chambre de combustion.

Un autre objectif de l'invention est de proposer un tel dispositif de piégeage, qui n'altère pas les performances de fonctionnement de la turbomachine, et notamment qui ne modifie pas la circulation de l'air à l'intérieur de celle-ci.

Un autre objectif de l'invention est de proposer un dispositif de piégeage compact.

Enfin, de façon avantageuse, un tel dispositif de piégeage doit également permettre le stockage temporaire des particules piégées puis leur retrait lors des opérations de maintenance de la turbomachine et ce, afin d'éviter une accumulation de ces particules dans le dispositif de piégeage.

A cet effet, l'invention concerne un dispositif de piégeage de particules pour turbomachine, ces particules étant notamment des grains de sable ou des poussières, contenues dans un flux d'air circulant à l'intérieur d'une turbomachine, notamment le flux d'air circulant dans la zone de contournement de la chambre de combustion de ladite turbomachine.

Conformément à l'invention, ce dispositif comprend :
- au moins deux déflecteurs de particules,
- un élément de collecte et de stockage des particules déviées par lesdits déflecteurs,
- des moyens de fixation dudit dispositif de piégeage sur une partie de la turbomachine,
lesdits déflecteurs étant de forme annulaire et étant fixés sur au moins une ossature de soutien, de façon à être coaxiaux, à être alignés radialement et à être espacés radialement l'un de l'autre ou les uns des autres, lesdits déflecteurs étant inclinés dans le même sens par rapport à leurs axes de révolution de façon à être tournés vers ledit élément de collecte et de stockage des particules.

Grâce à ces caractéristiques de l'invention, toutes les particules qui viennent buter contre le ou les déflecteur(s) sont renvoyées vers l'élément de collecte et de stockage des particules et n'obturent plus les trous ménagés dans la paroi de la chambre de combustion.

Ce dispositif présente en outre l'avantage d'être très compact.

Selon d'autres caractéristiques avantageuses et non limitatives de l'invention, prises seules ou en combinaison :
- ladite ossature de soutien est un anneau qui s'étend dans un plan perpendiculaire ou sensiblement perpendiculaire à l'axe de révolution des déflecteurs, les déflecteurs d'une paire de déflecteurs contigus sont fixés respectivement le long du bord circulaire externe et du bord circulaire interne de ladite ossature annulaire de soutien et cette ossature de soutien est percée d'ouvertures de passage du flux d'air ;
- la face intérieure d'un déflecteur présente un angle d'inclinaison par rapport audit axe de révolution plus grand que l'angle d'inclinaison par rapport à ce même axe de révolution de la face intérieure d'un déflecteur disposé radialement plus à l'intérieur du dispositif ;
- le rayon intérieur d'un déflecteur le plus à l'extérieur d'une paire de déflecteurs contigus est inférieur ou égal au rayon extérieur d'un déflecteur situé plus à l'intérieur ;
- le dispositif comprend trois déflecteurs ;
- au moins l'un desdits déflecteurs possède une section transversale rectiligne ;
- au moins l'un desdits déflecteurs possède une section transversale incurvée dont la concavité est tournée vers l'élément de collecte et de stockage des particules ;
- l'élément de collecte et de stockage comprend un anneau plein coaxial à l'axe de révolution des déflecteurs et qui s'étend dans un plan perpendiculaire ou sensiblement perpendiculaire à cet axe, cet anneau étant prolongé en direction dudit déflecteur par un rebord annulaire extérieur plein et par un rebord annulaire intérieur plein, ledit élément de collecte et de stockage étant disposé en regard du déflecteur ;
- lesdits moyens de fixation comprennent une bride annulaire plane coaxiale à l'axe de révolution des déflecteurs et perpendiculaire à celui-ci et qui se prolonge en direction de l'élément de collecte et de stockage des particules, par un cylindre d'axe longitudinal coaxial audit axe de révolution, en ce que ledit cylindre est percé de plusieurs ouvertures de passage du flux d'air et en ce que ladite bride annulaire est percée de plusieurs orifices de passage d'organes de fixation.

Enfin, l'invention concerne également une turbomachine comprenant une chambre de combustion et une zone de contournement ménagée entre la paroi de ladite chambre de combustion et un carter extérieur de ladite turbomachine, cette turbomachine étant équipée du dispositif de piégeage de particules précité.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est une vue schématique en coupe longitudinale d'un exemple de réalisation d'une turbomachine,
- la figure 2 est une vue du détail A de la figure 1, sur laquelle on a en outre représenté le dispositif de piégeage conforme à l'invention,
- les figures 3, 4 et 5 sont des vues partielles et en perspective d'un mode de réalisation du dispositif de piégeage conforme à l'invention, prises selon trois angles d'observation différents.

### DESCRIPTION DETAILLEE

Le dispositif de piégeage des particules conforme à l'invention porte la référence générale 2.

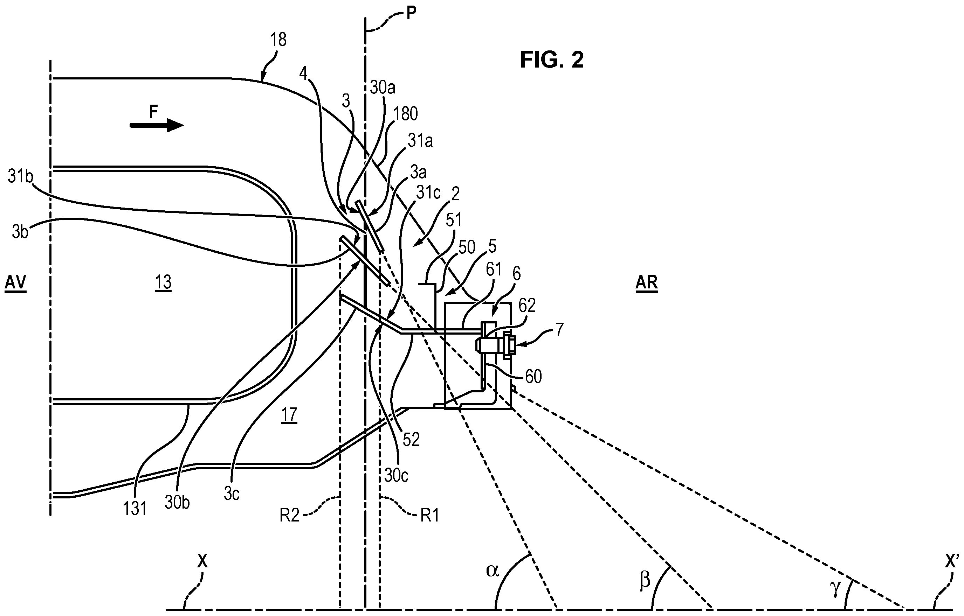

Comme on peut le voir sur la figure 2, ce dispositif 2 est destiné à être positionné dans la zone 17 de contournement de la chambre de combustion 13, plus précisément à l'extérieur de la paroi 131 de la chambre de combustion 13 et à l'intérieur du carter extérieur 18 de la turbomachine.

Toutefois, sa position précise sera déterminée par calcul, en fonction de la trajectoire des particules contenues dans le flux d'air circulant à l'intérieur de cette zone de contournement 17. Ce calcul tient également compte des formes respectives de la paroi 131 et de la portion de paroi 180 du carter extérieur 18, située en regard de l'extrémité arrière de la chambre de combustion 13.

Le dispositif de piégeage sera ainsi avantageusement disposé à l'endroit où il permettra de recueillir un maximum de particules, avant que celle-ci n'atteignent les trous 130 de la paroi de la chambre de combustion.

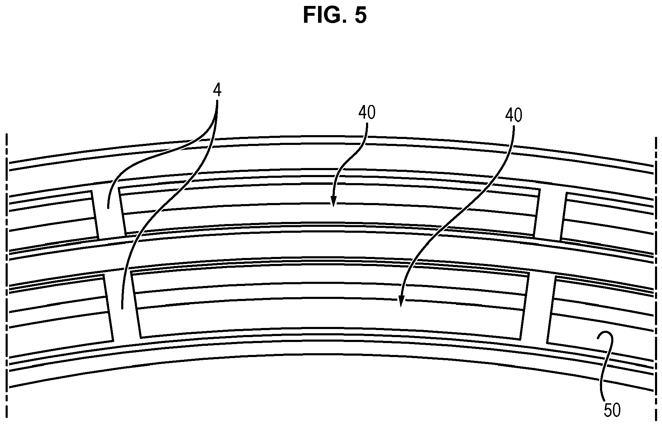

Un mode particulier de réalisation de ce dispositif de piégeage 2 va maintenant être décrit en faisant référence aux figures 2 à 5.

Ce dispositif de piégeage 2 comprend de préférence, de l'avant AV vers l'arrière AR, au moins deux déflecteurs 3, un élément 5 de collecte et de stockage des particules et des moyens de fixation 6 dudit dispositif de stockage sur une partie de la turbomachine.

Tous ces éléments sont réalisés dans un matériau qui résiste à la chaleur et de préférence également à l'abrasion des particules, par exemple du métal ou un matériau composite.

Ces différents éléments vont maintenant être décrits plus en détail.

Le dispositif comprend au moins deux déflecteurs 3, par exemple trois comme représenté sur les figures. On pourrait également avoir plus de trois déflecteurs.

Chaque déflecteur présente la forme d'un anneau, d'axe de révolution X, X'. Les différents déflecteurs 3 sont fixés sur une ossature de soutien 4, de façon à être coaxiaux d'axe X-X' et espacés radialement les uns des autres.

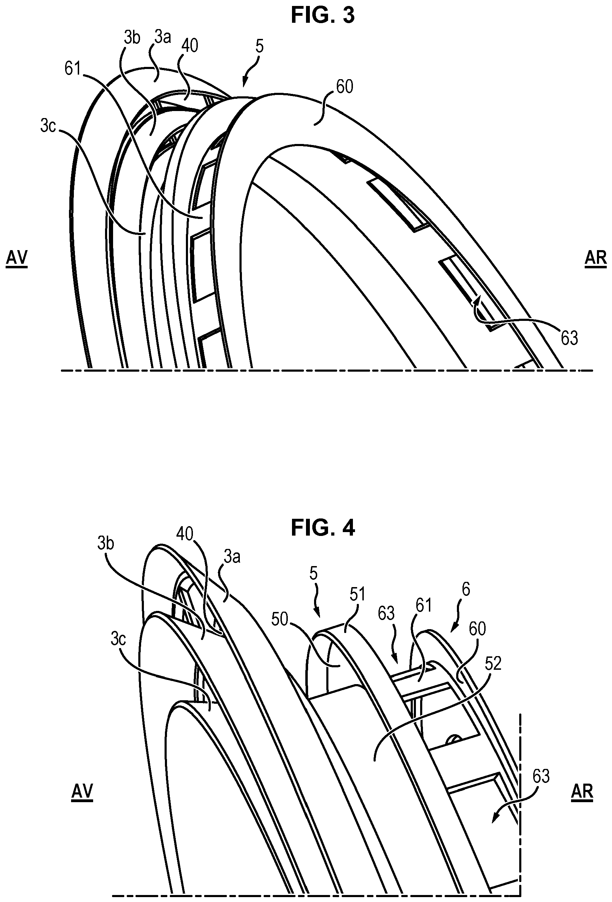

Dans l'exemple décrit et représenté sur la figure 3, ces déflecteurs sont dénommés déflecteurs « externe » 3a, « médian » 3b et « interne » 3c, le déflecteur externe étant celui de plus grand diamètre et donc situé le plus à l'extérieur. Chaque déflecteur est constitué d'un élément ayant la forme d'une lame pleine de faible largeur refermée sur elle-même en forme d'anneau.

Tous les déflecteurs 3a, 3b, 3c sont en outre fixés sur l'ossature 4 de façon à être inclinés dans le même sens par rapport à leur axe de révolution commun X-X', c'est-à-dire à être inclinés de l'extérieur et l'avant vers l'axe de révolution X-X' et l'arrière AR. En d'autres termes, ils présentent une forme d'anneau tronconique. Toutefois, leurs angles d'inclinaison sont de préférence différents. Ces déflecteurs sont tournés vers l'élément 5.

Enfin, les déflecteurs 3, 3a, 3b, 3c sont fixés sur l'ossature 4 de façon à être alignés radialement et à ne pas être décalés le long de l'axe X-X', de façon à ne pas occuper une place trop importante entre la paroi 130 de la chambre de combustion et la paroi 180 du carter et à ne pas restreindre l'écoulement du flux d'air qui circule à cet endroit.

Par "alignés radialement", on entend que tous les déflecteurs 3a, 3b, 3c coupent un même plan référencé P, perpendiculaire à leurs axes de révolution respectifs X-X', ces axes étant confondus.

La face intérieure 30a du déflecteur externe 3a (c'est-à-dire la face tournée vers l'axe X-X') forme un angle α avec l'axe de révolution X-X', la face intérieure 30b du déflecteur médian 3b, forme avec l'axe X-X' un angle β et enfin la face intérieure 30c du déflecteur interne 3c forme un angle γ avec l'axe X-X'. Comme on peut le constater sur la figure 2, l'angle α est supérieur à l'angle β qui est lui-même supérieur à l'angle γ.

De préférence, l'angle α est compris entre 65° et 75°, de préférence encore égale à 70°, l'angle β est compris entre 45° et 55°, de préférence encore égal à 50°, l'angle γ est compris entre 25° et 35°, de préférence encore égal à 30°.

De préférence, et comme on peut le voir sur la figure 2, les déflecteurs 3a, 3b et 3c présentent une section transversale rectiligne. Toutefois, celle-ci pourrait être incurvée, sa concavité étant orientée vers l'élément de collecte et de stockage 5 des particules.

Comme cela apparaît mieux sur les figures 2, 4 et 5, l'ossature 4 joue le rôle d'entretoise entre deux déflecteurs contigus. Elle présente la forme d'un anneau qui s'étend dans un plan perpendiculaire ou sensiblement perpendiculaire à l'axe de révolution X-X', par exemple le plan P. L'ossature 4 est percée d'ouvertures 40 permettant le passage du flux d'air. Ces ouvertures 40 sont avantageusement réparties à intervalles réguliers et constituent de préférence une part importante de la surface de l'ossature 4. Elles permettent également d'alléger l'ossature.

Dans le cas où le dispositif de piégeage 2 comprend plus de deux déflecteurs, par exemple trois comme sur les figures, il comprend alors une ossature 4 entre chaque paroi de déflecteurs contigus (voir figure (5).Les déflecteurs d'une paire de déflecteurs contigus sont fixés respectivement le long du bord circulaire externe et du bord circulaire interne de l'ossature annulaire 4.

De façon avantageuse, les déflecteurs 3, 3a, 3b, 3c sont fixés sur les ossatures 4 par soudure.

Comme cela apparait mieux sur les figures 2 et 4, de préférence, l'élément 5 de collecte et de stockage des particules comprend un anneau plein 50, coaxial à l'axe de révolution X-X' des déflecteurs 3a à 3c et qui s'étend dans un plan perpendiculaire ou sensiblement perpendiculaire à cet axe.

De préférence, il y a un unique élément de collecte 5 pour l'ensemble des déflecteurs 3, 3a, 3b, 3c.

Cet anneau 50 se prolonge vers l'avant AV par un rebord annulaire extérieur plein 51 et par un rebord annulaire intérieur plein 52.

De préférence, le rebord annulaire intérieur 52 se situe dans le prolongement du bord arrière du déflecteur 3c le plus à l'intérieur. De préférence encore, ces deux éléments ne forment qu'une seule et même pièce.

Cet élément 5 a donc la forme générale d'une gouttière orientée en regard des déflecteurs 3, 3a, 3b, 3c.

Enfin, comme cela est mieux visible sur les figures 2 à 4, de préférence, les moyens de fixation 6 comprennent une bride annulaire 60 plane, coaxiale à l'axe de révolution X-X' des déflecteurs et perpendiculairement à cet axe X-X'et qui se prolonge vers l'avant par un cylindre 61 d'axe longitudinal X-X'.

La bride 60 est percée de plusieurs orifices 62 qui permettent le passage d'organes de fixation 7, tels que par exemple des vis. Ces vis permettent de fixer la bride sur une partie de la turbomachine.

Le cylindre 61 est percé d'une pluralité d'ouvertures 63 permettant le passage du flux d'air circulant à l'intérieur de la turbomachine. De façon similaire à ce qui a été décrit pour les ossatures 4, ces ouvertures 63 représentent une partie importante de la surface du cylindre 61, de façon à ne pas freiner ou restreindre l'écoulement de l'air. Elles contribuent également à diminuer la masse globale du dispositif.

Le cylindre 61 est lié à l'élément 5 de stockage de particules. De préférence, le cylindre 61 est soudé à l'extrémité intérieure de l'anneau 50 de l'élément 5.

Le fonctionnement du dispositif est le suivant.

L'air issu du compresseur 12, chargé en particules P, pénètre à l'intérieur de la zone de contournement 17, de l'avant AV vers l'arrière AR entre la paroi radiale externe 131 de la chambre de combustion 13 et le carter 18 (flèche F en figure 2).

Ce flux d'air chargé en particules vient percuter la paroi 180, de sorte que les particules ricochent contre celle-ci et viennent ensuite frapper les faces extérieures 31a, 31b, 31c des déflecteurs 3a, 3b et 3c orientées vers cette paroi 180. La course des particules est freinée, celles-ci glissent vers l'intérieur (vers l'axe X-X'), le long des déflecteurs jusqu'à être recueillies et collectées dans l'élément 5, d'où elles ne peuvent sortir puisque les parois de celui-ci sont pleines.

Les ouvertures 40 permettent toutefois de limiter l'impact du dispositif de piégeage 2 sur la circulation du flux d'air et donc de limiter les pertes de charges. En d'autres termes, les particules sont retenues par l'élément 5 mais le flux d'air peut continuer à circuler autour des parois extérieures 131 de la chambre de combustion 13, afin de pénétrer dans les trous 130 et d'assurer la fonction de refroidissement de ces parois.

Enfin, on notera que, de façon avantageuse, le rayon intérieur R1 du déflecteur externe 3a (c'est-à-dire son plus petit rayon) est inférieur ou égal au rayon extérieur R2 du déflecteur médian contigu 3b (c'est-à-dire son plus grand rayon). Il peut en être de même pour chaque paire de déflecteurs contigus.

Ainsi, si une particule venait à ricocher contre la paroi 180 du carter 18 et repartait vers l'avant selon une direction parallèle à l'axe X-X', elle serait toujours obligatoirement piégée par le déflecteur externe 3a.

Des calculs de trajectoires de particules doivent être effectués pour chaque turbomachine, en fonction de la forme des parois délimitant la zone de contournement 17 de la chambre de combustion, de façon à positionner au mieux le piège à particules 2, afin que celui-ci retienne la quasi-totalité des particules ingérées par la turbomachine, et entrant dans le contournement de la chambre de combustion.

En outre, les valeurs des angles α, β et γ sont également ajustées en fonction de la forme de la paroi 180 et peuvent être différentes de celles mentionnées précédemment.

Lors des opérations de maintenance de la turbomachine, les particules piégées dans l'élément 5 peuvent alors être retirées pour éviter leur accumulation.

## Revendications

1. Dispositif de piégeage (2) de particules pour turbomachine, configuré pour être installé dans la zone de contournement de la chambre de combustion d'une turbomachine, lesdites particules étant notamment des grains de sable ou des poussières, contenues dans un flux d'air circulant à l'intérieur d'une turbomachine, notamment le flux d'air circulant dans la zone de contournement de la chambre de combustion de ladite turbomachine, **caractérisé en ce qu'**il comprend :
- au moins deux déflecteurs de particules (3, 3a, 3b, 3c),
- un élément (5) de collecte et de stockage des particules déviées par lesdits déflecteurs,
- des moyens (6) de fixation dudit dispositif de piégeage (2) sur une partie de la turbomachine,
lesdits déflecteurs (3, 3a, 3b, 3c) étant de forme annulaire et étant fixés sur au moins une ossature de soutien (4), de façon à être coaxiaux, à être alignés radialement et à être espacés radialement l'un de l'autre ou les uns des autres, lesdits déflecteurs (3, 3a, 3b, 3c) étant inclinés dans le même sens par rapport à leurs axes de révolution (X-X') de façon à être tournés vers ledit élément (5) de collecte et de stockage des particules.

2. Dispositif selon la revendication 1, **caractérisé en ce que** ladite ossature de soutien (4) est un anneau qui s'étend dans un plan perpendiculaire ou sensiblement perpendiculaire à l'axe de révolution (X-X') des déflecteurs (3, 3a, 3b, 3c), **en ce que** les déflecteurs d'une paire de déflecteurs contigus sont fixés respectivement le long du bord circulaire externe et du bord circulaire interne de ladite ossature annulaire de soutien (4) et **en ce que** cette ossature (4) de soutien est percée d'ouvertures (40) de passage du flux d'air.

3. Dispositif selon la revendication 1 ou 2, **caractérisé en ce que** la face intérieure d'un déflecteur (3a, 3b) présente un angle d'inclinaison (α,β) par rapport audit axe de révolution (X-X') plus grand que l'angle d'inclinaison (β, γ) par rapport à ce même axe de révolution (X-X') de la face intérieure d'un déflecteur (3b, 3c) disposé radialement plus à l'intérieur du dispositif.

4. Dispositif selon l'une des revendications précédentes, **caractérisé en ce que** le rayon intérieur (R1) d'un déflecteur le plus à l'extérieur d'une paire de déflecteurs contigus est inférieur ou égal au rayon extérieur (R2) d'un déflecteur situé plus à l'intérieur.

5. Dispositif selon l'une des revendications précédentes, **caractérisé en ce qu'**il comprend trois déflecteurs (3a, 3b, 3c).

6. Dispositif selon l'une des revendications précédentes, **caractérisé en ce qu'**au moins l'un desdits déflecteurs (3, 3a, 3b, 3c) possède une section transversale rectiligne.

7. Dispositif selon l'une des revendications 1 à 5, **caractérisé en ce qu'**au moins l'un desdits déflecteurs (3, 3a, 3b, 3c) possède une section transversale incurvée dont la concavité est tournée vers l'élément (5) de collecte et de stockage des particules.

8. Dispositif selon l'une des revendications précédentes, **caractérisé en ce que** l'élément (5) de collecte et de stockage comprend un anneau plein (50) coaxial à l'axe de révolution (X-X') des déflecteurs (3, 3a, 3b, 3c) et qui s'étend dans un plan perpendiculaire ou sensiblement perpendiculaire à cet axe, cet anneau (50) étant prolongé en direction dudit déflecteur par un rebord annulaire extérieur plein (51) et par un rebord annulaire intérieur plein (52), ledit élément (5) de collecte et de stockage étant disposé en regard du déflecteur.

9. Dispositif selon l'une des revendications précédentes, **caractérisé en ce que** lesdits moyens (6) de fixation comprennent une bride annulaire plane (60) coaxiale à l'axe de révolution (X-X') des déflecteurs (3, 3a, 3b, 3c) et perpendiculaire à celui-ci et qui se prolonge en direction de l'élément (5) de collecte et de stockage des particules, par un cylindre (61) d'axe longitudinal coaxial audit axe de révolution (X-X'), **en ce que** ledit cylindre (61) est percé de plusieurs ouvertures (63) de passage du flux d'air et **en ce que** ladite bride annulaire (60) est percée de plusieurs orifices (62) de passage d'organes de fixation (7).

10. Turbomachine (1) comprenant une chambre de combustion (13) et une zone de contournement (17) ménagée entre la paroi (131) de ladite chambre de combustion (13) et un carter extérieur (18) de ladite turbomachine, **caractérisée en ce qu'**elle est équipée du dispositif de piégeage de particules (2) selon l'une quelconque des revendications précédentes et **en ce que** ce dispositif (2) est disposé à l'intérieur de ladite zone de contournement (17).

## Patentansprüche

1. Partikeleinfangvorrichtung (2) für eine Turbomaschine, die ausgelegt ist, um in der Umgehungszone der Brennkammer einer Turbomaschine installiert zu sein, wobei diese Partikel insbesondere Sandkörner oder Staub sind, die in einem Luftstrom vorhanden sind, der im Inneren einer Turbomaschine zirkuliert, insbesondere dem Luftstrom, der in der Umgehungszone der Brennkammer der Turbomaschine zirkuliert, **dadurch gekennzeichnet, dass** sie umfasst:
- mindestens zwei Partikelablenker (3, 3a, 3b, 3c),
- ein Sammel- und Speicherelement (5) der von den Ablenkern abgelenkten Partikel,
- Befestigungsmittel (6) der Einfangvorrichtung (2) auf einem Teil der Turbomaschine,
wobei die Ablenker (3, 3a, 3b, 3c) ringförmig sind und auf mindestens einem Stützgerüst (4) derart befestigt sind, dass sie koaxial, radial ausgerichtet und radial der eine von dem anderen oder die einen von den anderen beabstandet sind, wobei die Ablenker (3, 3a, 3b, 3c) in derselben Richtung in Bezug auf ihre Drehachsen (X-X') derart geneigt sind, dass sie zu dem Partikel-Sammel- und Speicherelement (5) zeigen.

2. Vorrichtung nach Anspruch 1, **dadurch gekennzeichnet, dass** das Stützgerüst (4) ein Ring ist, der sich in einer Ebene erstreckt, die senkrecht oder etwa senkrecht zur Drehachse (X-X') der Ablenker (3, 3a, 3b, 3c) ist, dass die Ablenker eines Paars angrenzender Ablenker jeweils entlang des äußeren kreisförmigen Randes und des inneren kreisförmigen Randes des ringförmigen Stützgerüsts (4) befestigt sind und dass dieses Stützgerüst (4) von Durchgangsöffnungen (40) für den Luftstrom durchbrochen ist.

3. Vorrichtung nach Anspruch 1 oder 2, **dadurch gekennzeichnet, dass** die innere Fläche eines Ablenkers (3a, 3b) einen Neigungswinkel (α, β) in Bezug auf die Drehachse (X-X') aufweist, der größer als der Neigungswinkel (β, γ) in Bezug auf dieselbe Drehachse (X-X') der inneren Fläche eines Ablenkers (3b, 3c) ist, der radial mehr im Inneren der Vorrichtung angeordnet ist.

4. Vorrichtung nach einem der vorangehenden Ansprüche, **dadurch gekennzeichnet, dass** der Innenradius (R1) eines äußersten Ablenkers eines Paars angrenzender Ablenker kleiner oder gleich dem Außenradius (R2) eines Ablenkers ist, der sich mehr im Inneren befindet.

5. Vorrichtung nach einem der vorangehenden Ansprüche, **dadurch gekennzeichnet, dass** sie drei Ablenker (3a, 3b, 3c) umfasst.

6. Vorrichtung nach einem der vorangehenden Ansprüche, **dadurch gekennzeichnet, dass** mindestens einer der Ablenker (3, 3a, 3b, 3c) einen gerade transversalen Querschnitt besitzt.

7. Vorrichtung nach einem der Ansprüche 1 bis 5, **dadurch gekennzeichnet, dass** mindestens einer der Ablenker (3, 3a, 3b, 3c) einen gekrümmten transversalen Querschnitt besitzt, dessen Konkavität zum Partikel-Sammel- und Speicherelement (5) zeigt.

8. Vorrichtung nach einem der vorangehenden Ansprüche, **dadurch gekennzeichnet, dass** das Sammel- und Speicherelement (5) einen vollen Ring (50) umfasst, der koaxial zur Drehachse (X-X') der Ablenker (3, 3a, 3b, 3c) ist und der sich in einer Ebene erstreckt, die senkrecht oder etwa senkrecht zu dieser Achse ist, wobei dieser Ring (50) in Richtung des Ablenkers von einer vollen äußeren ringförmigen Kante (51) und von einer vollen inneren ringförmigen Kante (52) verlängert wird, wobei das Sammel- und Speicherelement (5) dem Ablenker zugewandt angeordnet ist.

9. Vorrichtung nach einem der vorangehenden Ansprüche, **dadurch gekennzeichnet, dass** die Befestigungsmittel (6) einen ebenen ringförmigen Flansch (60) umfassen, der koaxial zur Drehachse (X-X') der Ablenker (3, 3a, 3b, 3c) und senkrecht zu dieser ist und der sich in Richtung des Partikel-Sammel- und Speicherelements (5) mittels eines Zylinders (61) mit einer Längsachse verlängert, die koaxial zur Drehachse (X-X') ist, und dass der Zylinder (61) von mehreren Durchgangsöffnungen (63) für den Luftstrom durchbrochen ist und das der ringförmige Flansch (60) von mehreren Durchgangsöffnungen (62) für Befestigungsorgane (7) durchbrochen ist.

10. Turbomaschine (1), umfassend eine Brennkammer (13) und eine Umgehungszone (17), die zwischen der Wand (131) der Brennkammer (13) und einem äußeren Gehäuse (18) der Turbomaschine eingerichtet ist, **dadurch gekennzeichnet, dass** sie mit einer Partikeleinfangvorrichtung (2) nach einem der vorangehenden Ansprüche ausgestattet ist und dass diese Vorrichtung (2) im Inneren der Umgehungszone (17) angeordnet ist.

## Claims

1. A particle-trapping device (2) for a turbomachine, configured to be disposed in the bypass area of the combustion chamber of the turbomachine these particles being in particular grains of sand or dust, contained in an air flow circulating inside a turbomachine, particularly the air flow circulating in the bypass area of the combustion chamber of said turbomachine, **characterized in that** it comprises:
- at least two particle deflectors (3, 3a, 3b, 3c),
- an element (5) for collecting and storing particles deflected by said deflectors,
- means (6) for attaching said trapping device (2) on a portion of the turbomachine,
said deflectors (3, 3a, 3b, 3c) having an annular shape and being attached to at least one support frame (4) so as to be coaxial, to be radially aligned and to be spaced radially from one another or from each other, said deflectors (3, 3a, 3b, 3c) being inclined in the same direction with respect to their axes of revolution (X-X') so as to be turned toward said particle collecting and storing element (5).

2. The device according to claim 1, **characterized in that** said support frame (4) is a ring which extends in a plane perpendicular or substantially perpendicular to the axis of revolution (X-X') of the deflectors (3, 3a, 3b, 3c), **in that** the deflectors of a pair of contiguous deflectors are attached respectively along the outer circular edge and the inner circular edge of said annular support frame (4) and **in that** this support frame (4) is perforated with openings (40) for passage of the air flow.

3. The device according to claim 1 or 2, **characterized in that** the inner face of a deflector (3a, 3b) has an angle of inclination (α,β) with respect to said axis of revolution (X-X') greater than the angle of inclination (β, γ) with respect to this same axis of revolution (X-X') of the inner face of a deflector (3b, 3c) disposed radially further inside the device.

4. The device according to one of the preceding claims, **characterized in that** the inner radius (R1) of an outermost deflector of a pair of contiguous deflectors is less than or equal to the outer radius (R2) of a deflector located further inside.

5. The device according to one of the preceding claims, **characterized in that** it comprises three deflectors (3a, 3b, 3c).

6. The device according to one of the preceding claims, **characterized in that** at least one of said deflectors (3, 3a, 3b, 3c) has a rectilinear cross section.

7. The device according to one of claims 1 to 5, **characterized in that** at least one of said deflectors (3, 3a, 3b, 3c) has a curved cross section, the concavity whereof is turned toward the particle collecting and storing element (5).

8. The device according to one of the preceding claims, **characterized in that** the collecting and storing element (5) comprises a solid ring (50) coaxial with the axis of revolution (X-X') of the deflectors (3, 3a, 3b, 3c) and which extends in a plane perpendicular or substantially perpendicular to this axis, this ring (50) being continued in the direction of said deflector by a solid outer annular edge (51) and by a solid inner annular edge (52), said collecting and storing element (5) being disposed facing the deflector.

9. The device according to one of the preceding claims, **characterized in that** said attachment means (6) comprise a planar annular flange (60) coaxial with the axis of revolution (X-X') of the deflectors (3, 3a, 3b, 3c) and perpendicular to it, and which is continued in the direction of the particle collecting and storing element (5) by a cylinder (61) with a longitudinal axis coaxial with said axis of revolution (X-X'), **in that** said cylinder (61) is perforated with several openings (63) for passage of the air flow and **in that** said annular flange (60) is perforated with several openings (62) for passage of attachment members (7).

10. A turbomachine (1) comprising a combustion chamber (13) and a bypass area (17) provided between the wall (131) of said combustion chamber (13) and an outer casing (18) of said turbomachine, **characterized in that** it is equipped with the particle-trapping device (2) according to any one of the preceding claims and **in that** this device (2) is disposed inside said bypass area (17).
